# FASCICULE DE BREVET EUROPEEN

(11) **EP 0 574 422 B1**
(45) Date de publication et mention de la délivrance du brevet: **16.08.1995**
(21) Numéro de dépôt: 92904680.3
(22) Date de dépôt: 02.03.1992
(51) Int. Cl.: C03B 29/06, C03B 33/095, C03B 33/085

(54) **Procédé de traitement thermique d'articles de verrerie et de cristallerie dans un plan perpendiculaire à leur axe de rotation et dispositif mettant en euvre le procédé**
Verfahren und Vorrichtung zur thermischen Behandlung von Glas- oder Kristallgegenständen in einer senkrecht zu ihrer Rotationsachse stehenden Fläche
Method for heat treating glassware and crystalware articles in a plane perpendicular to their rotation axis, and device for implementing such method

(30) Priorité: 05.03.1991 BE 9100206
(43) Date de publication de la demande: 22.12.1993
(73) Titulaire: ETABLISSEMENTS BIEBUYCK S.A., B-7110 Houdeng-Goegnies (BE)
(72) Inventeur: BIEBUYCK, Léon, B-7034 Obourg (BE)
(74) Mandataire: Vanderperre, Robert
(86) Numéro de dépôt international: BE9200007
(87) Numéro de publication internationale: WO9215534

(56) Documents cités:
- FR-A- 1 136 999
- FR-A- 2 164 526
- US-A- 2 704 418
- US-A- 2 883 797
- US-A- 3 193 369
- US-A- 3 790 087

## Description

L'invention concerne le traitement thermique d'articles de verrerie et de cristallerie dans un plan perpendiculaire à un axe de rotation et est relative à un dispositif mettant en oeuvre un tel traitement.

Le traitement thermique d'articles de verrerie ou de cristallerie dans un plan perpendiculaire à un axe de rotation a généralement pour but d'introduire dans le matériau constitutif de l'article, généralement fragile, des contraintes mécaniques transitoires ou à porter une partie ou la totalité de la matière constituant l'article, située à proximité de ce plan, dans le domaine plastique.

Une opération faisant intervenir des contraintes transitoires est le décallotage à froid. Dans ce cas, les contraintes sont destinées à provoquer ou à propager des fissures, qualifiées de fissures thermiques, dont le but est de séparer de l'article proprement dit la masse de verre ou de cristal, ci-après appelée calotte, qui a servi à tenir l'article lors de sa phase de mise en forme par déformation plastique à chaud. Le décallotage proprement dit est généralement précédé d'une opération de traçage qui a pour but de créer à la surface du matériau fragile constituant l'article, dans le plan souhaité pour la séparation de la calotte, ci-après appelé plan de décallotage, par l'action d'un outil contondant, une fissure mécanique généralement de profondeur réduite qui, en jouant le rôle d'amorce, aide la fissuration profonde engendrée par contrainte thermique et fait en sorte que cette fissuration profonde se produise dans l'environ le plus immédiat du plan de décallotage.

Une opération où une partie de la matière constituant l'article est portée dans le domaine plastique est le rebrûlage de bords d'articles de table, verre à boire par exemple, ayant subi une opération de décallotage. Il s'agit dans ce cas d' éliminer d'éventuelles contraintes parasites résiduelles résultant d'opérations antérieures et d'arrondir le bord de l'article de manière à rendre son utilisation plus agréable.

Le traitement thermique d'articles de verrerie ou de cristallerie dans un plan perpendiculaire à un axe de rotation est classiquement réalisé à l'aide d'une source de calories ou de frigories, par exemple un ou plusieurs brûleurs classiquement utilisés, un ou plusieurs faisceaux laser, une ou plusieurs sources radiantes infra-rouge, ou tout autre type de générateurs de calories ou de frigories appropriés, judicieusement disposée dans l'environnement de l'article, de manière à induire dans cet article un champ de température adéquat. Les articles sont classiquement animés d'un mouvement de rotation autour de l'axe de rotation considéré de manière à ce que le champ de température soit le plus semblable possible dans chaque section de l'article passant par cet axe. Le traitement est réalisé, soit sur un seul poste de travail, soit sur plusieurs postes de travail par indexage périodique, soit de manière continue et progressive par une source de calories ou de frigories disposée en rampe rectiligne ou curviligne; dans ce dernier cas, les articles à traiter défilent devant cette rampe à une vitesse appropriée et la position de la source de calories ou de frigories constituée par la rampe par rapport à l'article est définie conventionnellement par la projection de la configuration dans un plan perpendiculaire au déplacement relatif de l'article par rapport à la rampe.

La position relative de la source de calories ou de frigories par rapport aux articles est classiquement réglable pour chaque type d'article, et en particulier la position relative de la source de calories ou de frigories par rapport aux articles dans un plan passant par l'axe de rotation de l'article en cours de traitement. L'inclinaison de la source de calories ou de frigories par rapport à l'axe de rotation de l'article, surtout si la source est fortement directionnelle, est également importante et classiquement réglable pour chaque type d'article.

La pratique du traitement thermique d'articles de verterie ou de cristallerie dans un plan perpendiculaire à un axe de rotation montre que, dans la plupart des cas, le meilleur résultat est obtenu lorsque la distance entre la source de calories ou de frigories et la paroi de l'article à traiter est maintenue constante. La pratique du traitement thermique utilisant le brûleur à flamme ou toute autre source de calories fortement directionnelle montre également que, dans la plupart des cas, le meilleur résultat est obtenu lorsque la direction de la flamme ou plus généralement du flux de calories, dans un plan comprenant l'axe de rotation de l'article, est perpendiculaire à la paroi de l'article.

Dans la pratique courante, la source de calories ou de frigories n'étant positionnée par rapport à l'article à traiter, manuellement ou par un automatisme plus sophistiqué, que pour un type d'article, sans tenir compte des disparités d'article à article ou de géométries particulières liées au type d'article, il s'ensuit que les conditions optimales ne sont réalisées pendant tout le traitement d'un article particulier que lorsque celui-ci est rond et si son axe de symétrie se confond rigoureusement avec son axe de rotation.

Or, on sait par la pratique que, si les articles d'un même type sont évidemment semblables, ils ne sont pas rigoureusement identiques. On définit comme le défaut géométrique la différence dimensionnelle entre un article réel et son modèle idéal. Las articles réalisés grâce à des machines automatiques de façonnage à chaud présentent généralement des défauts géométriques de quelques dixièmes de millimètres alors que les articles fabriqués de façon artisanale peuvent présenter des défauts géométriques beaucoup plus importants, de l'ordre de plusieurs millimètres ; on connaît également des cas où on est amené à traiter des articles dont la section n'est délibérément pas ronde, mais se présente sous la forme de polygone régulier ou de toute autre forme régulière ou irrégulière.

La variation de la distance entre la source de calories ou de frigories et la paroi de l'article à traiter, d'un article à l'autre, ou, pour un même article, durant la rotation de celui-ci devant la source de calories ou de frigories engendre des variations du champ de température dans différentes sections de l'article passant par son axe de rotation. De plus, dans la pratique du traitement thermique utilisant comme source de calories le brûleur à flamme ou tout autre source fortement directionnelle, dans le cas où la source de calories est inclinée par rapport à l'axe de rotation de l'article, une variation de la distance entre la paroi de l'article et la source de calories engendre un déplacement proportionnel du point de rencontre de la paroi et du flux de calories par rapport au plan de traitement choisi; ce fait est hautement préjudiciable et, dans le cas du décallotage, engendre des fractures irrégulières qui condamnent l'article ou nécessitent, pour le récupérer, de longues opérations d'usinage postérieures.

On connaît le document FR-A-2 164 526, qui décrit une machine transfert, dont les brûleurs sont disposés en une ou plusieurs rampes curvilignes épousant le chemin de déplacement des articles à traiter, lesdits brûleurs étant situés dans le plan de traitement et dirigés perpendiculairement à la paroi des articles et la ou les rampes curvilignes étant positionnées par un simple dispositif mécanique et restant fixes pendant que la machine est en fonctionnement en dehors d'une intervention d'un opérateur.

On connaît également le document US-A-2704418, qui décrit une machine à un seul poste de travail comprenant plusieurs brûleurs disposés en cercle par rapport à l'axe du mandrin portant l'article. Lesdits brûleurs sont inclinés par rapport au plan de traitement et leur direction forme un angle faible avec la paroi de l'article; dans ce document également, la position des brûleurs est réglée manuellement et reste fixe pendant toute la durée du traitement d'un article.

On connaît encore le document FR-A-1 136 999, qui décrit une machine transfert pour le sectionnement de tubes en verre. Cette machine comprend au moins un poste de traçage et un poste de chauffage. Au poste de traçage l'arête de traçage est maintenue élastiquement contre la paroi du tube. Le poste de chauffage comprend un seul brûleur situé dans le plan de traitement et tangentiel par rapport à la paroi. Dans ce document le brûleur est monté sur un support relié par un mécanisme à une piste maintenue élastiquement en contact avec la paroi du tube, le déplacement de cette piste de contact en fonction des défauts de concentricité ou d'ovalisation du tube engendrant un déplacement du brûleur, de telle sorte que la flamme reste tangentielle au tube. Il s'agit là d'une première tentative, par un mécanisme simple et dans le seul cas d'un article tubulaire, de réalisation de suivi de la source de chaleur en fonction de défauts inhérents à un article en particulier. Dans ce cas cependant, seule la direction tangentielle du brûleur est maintenue alors que sa distance par rapport au point d'action sur la paroi de l'article peut varier largement.

La présente invention a pour but de remédier aux inconvénients décrits plus haut.

Suivant l'invention, le dispositif de traitement thermique d'articles de verrerie et de cristallerie dans un plan perpendiculaire à un axe de rotation, comportant le mandrin maintenant l'article à traiter en rotation autour de l'axe perpendiculaire au plan de traitement, comprenant une source de calories ou de frigories montée sur un support pouvant se déplacer par rapport à l'embase suivant la direction définie parallèlement au plan de traitement, est caractérisé en ce qu'il comporte un premier capteur qui, lors d'une opération préalable d'acquisition de données, mesure la position de l'intersection de la paroi extérieure de l'article en rotation et du plan de traitement dans une direction définie parallèlement audit plan en fonction de la position angulaire de l'article mesurée par un deuxième capteur, et une unité de mémorisation et de commande qui stocke et traite les données transmises par les capteurs, et en ce qu'il utilise ces données lors du traitement proprement dit pour piloter le déplacement, suivant une direction définie parallèlement au plan de traitement, de la source de calories ou de frigories, de telle sorte que la position de cette source de calories ou de frigories soit sensiblement constante par rapport à la position de l'intersection de la paroi extérieure de l'article en rotation et du plan de traitement dans cette direction, et cela quelle que soit la position angulaire de l'article en rotation permanente autour de l'axe et cela pendant toute la durée du traitement.

L'avantage obtenu grâce à cette invention consiste essentiellement en ceci que le champ de température engendré par la source de calories ou de frigories est sensiblement constant dans toutes les sections de l'article passant par son axe de rotation par rapport au plan de traitement choisi et donc que l'effet de ce traitement est lui aussi sensiblement constant dans toutes les sections de l'article passant par son axe de rotation par rapport au plan de traitement choisi.

L'invention est exposée ci-après plus en détail à l'aide de dessins représentant seulement et de manière non limitative différents modes d'exécution.

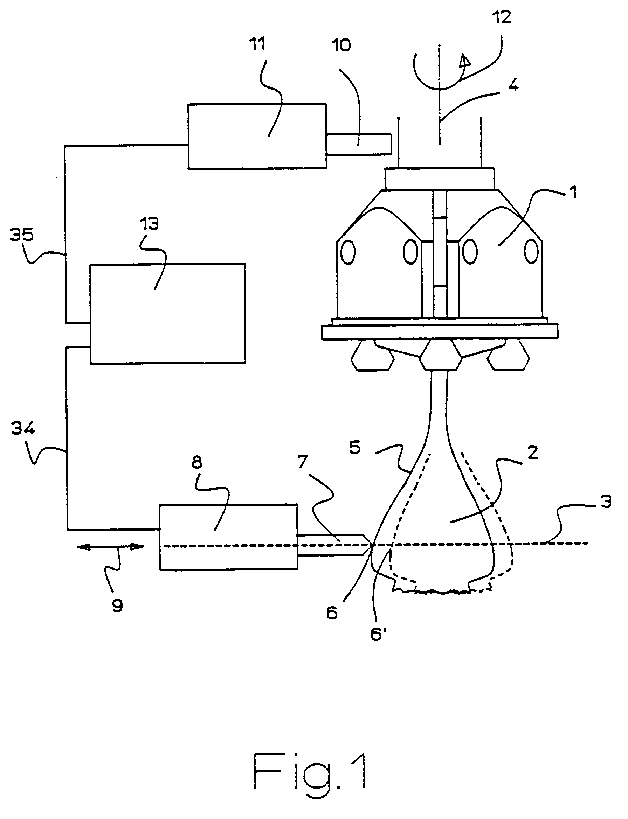

La figure 1 représente, en élévation, une partie du dispositif réalisant le traitement thermique d'articles de verrerie et de cristallerie dans un plan perpendiculaire à un axe de rotation suivant la présente invention, à savoir le dispositif d'acquisition des données géométriques.

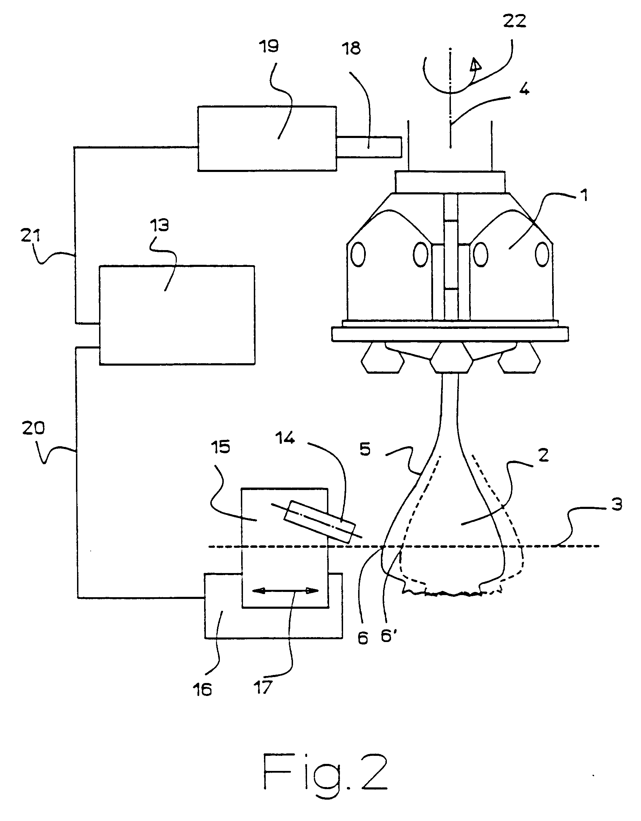

La figure 2 représente, en élévation, une partie du dispositif réalisant le traitement thermique d'articles de verrerie et de cristallerie dans un plan perpendiculaire à un axe de rotation suivant la présente invention, à savoir le dispositif de traitement proprement dit.

La figure 3 représente schématiquement une réalisation possible de l'unité de mémorisation et de commande représenté aux figures 1 et 2.

La figure 4 représente schématiquement une partie d'une réalisation possible de l'unité de mémorisation et de commande représenté aux figures 1,2 et 3.

La figure 5 représente schématiquement une partie d'une réalisation possible de l'unité de mémorisation et de commande représenté aux figures 1,2 et 3.

La figure 6 représente, en élévation, une réalisation particulièrement simple du dispositif réalisant le traitement thermique d'articles de verrerie et de cristallerie dans un plan perpendiculaire à un axe de rotation suivant la présente invention.

La figure 7 représente, en plan, une réalisation possible du dispositif réalisant le traitement thermique d'articles de verrerie et de cristallerie dans un plan perpendiculaire à un axe de rotation suivant la présente invention, dans le cas où l'article est de forme sensiblement circulaire ou assimilée et la source de calories ou de frigories de forme annulaire.

Les figures représentent un dispositif réalisant le traitement thermique d'articles de verrerie et de cristallerie dans un plan perpendiculaire à un axe de rotation suivant la présente invention, comprenant essentiellement un mandrin 1 maintenant un article 2 à traiter thermiquement dans un plan 3 sensiblement perpendiculaire à l'axe de rotation 4 du mandrin 1; l'intersection 6 de la paroi extérieure 5 de l'article 2 avec le plan 3 dans une direction donnée 9, définie parallèlement au plan de traitement 3, varie généralement avec la position angulaire de l'article 2; le point 6' indique une autre position du point 6 à un autre moment de la rotation de l'article.

Lors de la phase d'acquisition des données géométriques, un capteur 7 faisant partie d'une chaîne de mesure 8 enregistre à des instants connus la position du point 6 dans la direction 9, également perpendiculaire à l'axe de rotation 4, alors qu'aux mêmes instants connus un autre capteur 10 faisant partie d'une autre chaîne de mesure 11 enregistre la position angulaire 12 du mandrin 1 et donc également de l'article 2; ces enregistrements sont transmis par l'intermédiaire des lignes 34 et 35 vers une unité de mémorisation et de commande 13.

Le traitement proprement dit est réalisé par une source de calories ou de frigories 14 montée sur un support 15 lui-même mobile suivant une direction 17, également parallèle au plan de traitement 3 et pouvant également être parallèle ou confondue avec la direction 9, par rapport à une embase 16 constituant une unité de pilotage; les informations nécessaires au pilotage du déplacement du support 15 par rapport à l'embase 16 suivant la direction 17 sont transmises à des instants connus par l'unité de mémorisation et de commande 13 par l'intermédiaire de la ligne 20 en fonction de la position angulaire 22 du mandrin 1 et donc également de l'article 2, mesurée aux mêmes instants connus par le capteur 18 faisant partie d'une chaîne de mesure 19 et transmise par la ligne 21 à l'unité de mémorisation et de commande 13.

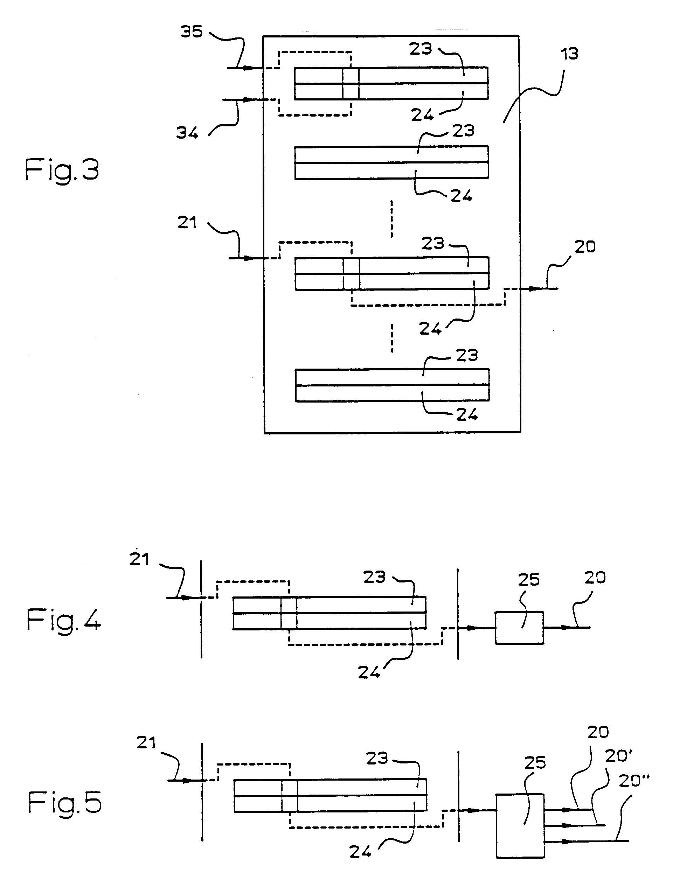

Comme le montre schématiquement la figure 3, lors de la phase d'acquisition des données, les informations provenant du capteur 10 par la ligne 35 concernant la position angulaire 12 du mandrin 1 sont mémorisées sur un support informatique 23 et les informations provenant du capteur 7 par la ligne 34 concernant la position géométrique du point 6 dans la direction 9, parallèle dans ce cas à la direction 17, sont mémorisées sur un support informatique 24; les supports informatiques 23 et 24 sont tels qu'une relation biunivoque est établie entre les données prises à des moments identiques.
Lors du traitement proprement dit, l'information provenant du capteur 18 par l'intermédiaire de la ligne 21 concernant la position angulaire 22 du mandrin 1 est comparée aux informations précédemment enregistrées sur le support informatique 23 et l'information correspondant à la valeur courante de la position angulaire 22 de l'article 2, précédemment enregistrée sur le support informatique 24 et concernant la position géométrique du point 6 dans la direction 17, est envoyée par l'intermédiaire de la ligne 20 vers l'embase 16 constituant une unité de pilotage.
Dans le cas où plusieurs articles sont à traiter en même temps à des postes de travail différents, ce qui est le cas pour une machine transfert comprenant plusieurs postes de traitement successifs, plusieurs couples de supports informatiques 23 et 24 sont nécessaires afin de conserver en mémoire simultanément les caractéristiques de plusieurs articles 2; la mémorisation des informations concernant chaque nouvel article 2 à traiter est alors réalisée sur les couples de supports informatiques 23 et 24 successifs suivant le principe de la pile informatique "premier entré, premier sorti".

La figure 4 montre schématiquement que, dans le cas où la direction ou la grandeur du déplacement du support 15 de la source de calories ou de frigories 14 suivant la direction 17 n'est pas directement égale à la grandeur du déplacement du point 6 enregistrée par le capteur 7 dans la direction 9, une unité de calcul 25 est prévue entre le support informatique 24 et l'embase 16 constituant l'unité de pilotage.

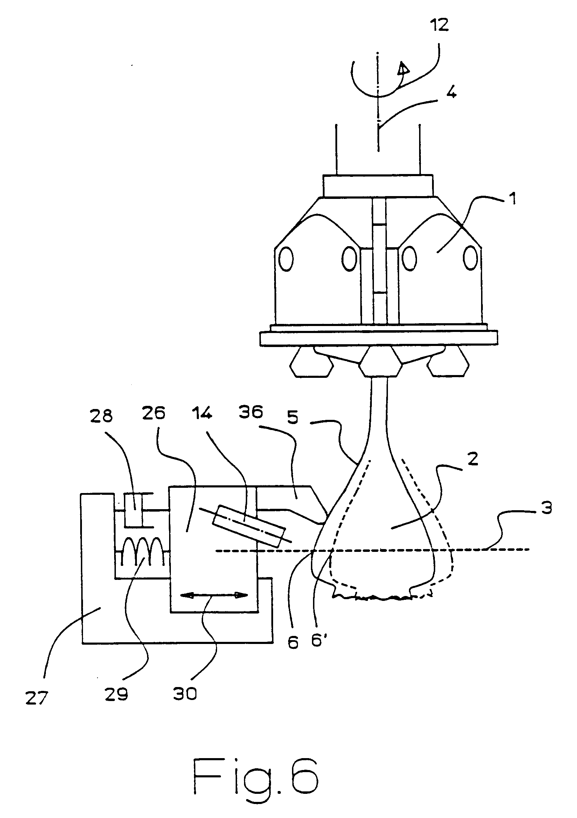

La figure 5 montre schématiquement que, dans le cas où le déplacement du support 15 de la source de calories ou de frigories 14 se fait suivant plusieurs directions 17, 17', 17'',.. combinées, l'unité de calcul 25 est pourvue de plusieurs sorties 20, 20', 20''.. dont chacune fournit l'information nécessaire aux différents axes de positionnement de la source de calories ou de frigories 14.

La figure 6 montre une réalisation particulièrement simple du dispositif réalisant le traitement thermique d'articles de verrerie et de cristallerie dans un plan perpendiculaire à un axe de rotation dans lequel le capteur 7 est remplacé par un élément d'appui 36 monté sur le même support mécanique 26 que la source de calories ou de frigories 14; le support mécanique 26 possède un degré de liberté suivant la direction 30 perpendiculaire à l'axe de rotation 4 par rapport par rapport à un support 27 fixe et est appliqué souplement sur la paroi extérieure 5 de l'article 2 dans le voisinage du point 6, intersection de la paroi extérieure 5 de l'article 2 et du plan de traitement 3, par l'action d'un système de ressort 28 et amortisseur 29; par ce système, la source de calories ou de frigories 14 reste sensiblement fixe par rapport au point 6 pour autant que l'inclinaison de la paroi 5 de l'article 2 par rapport à l'axe de rotation 4 soit sensiblement constante dans le voisinage du point 6 au cours de la rotation de l'article 2.

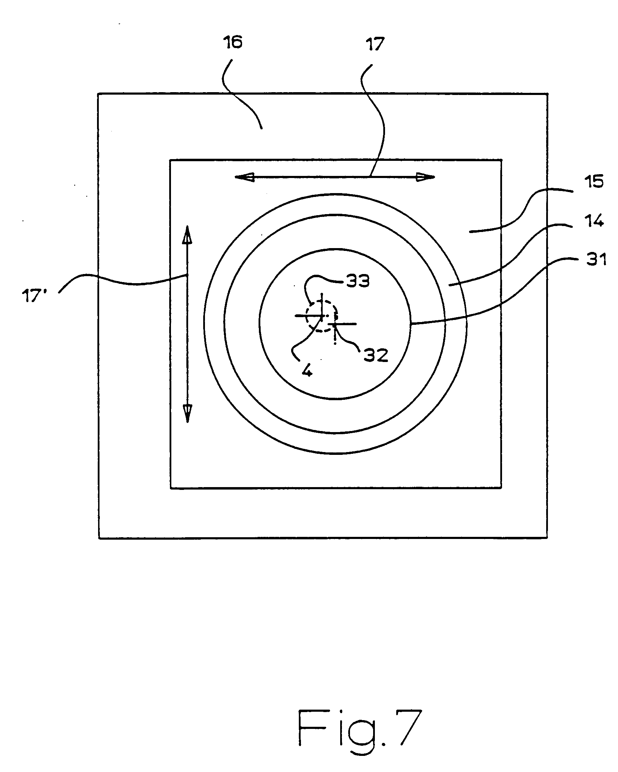

La figure 7, dans laquelle l'article 2 est représenté, en plan, par la trace 31 de l'intersection avec le plan de traitement 3 de sa paroi extérieure 5, montre que, dans le cas où l'article 2 est de forme sensiblement circulaire ou assimilée et la source de calories ou de frigories 14 de forme annulaire, on envisage de maintenir concentriques l'article 2 et la source de calories ou de frigories 14 durant toute la durée du traitement; dans le cas où le centre géométrique 32 de l'intersection 31, également sensiblement circulaire ou assimilée, n'est pas confondu avec l'axe de rotation 4, une réalisation possible du dispositif réalisant le traitement thermique d'articles de verrerie et de cristallerie dans un plan perpendiculaire à un axe de rotation consiste en ce que le support 15 de la source de calories ou de frigories 14 se déplace par rapport à l'embase 16 suivant deux directions 17 et 17' de telle sorte qu'à tout moment, l'intersection 31 est maintenue concentrique avec la source de calories ou de frigories 14 ; dans ce cas, les informations fournies par le capteur 7 et stockées dans l'unité de mémorisation et de commande 13 sont traitées par une unité de calcul 25 comme indiqué à la figure 5 de telle sorte que la combinaison des déplacements suivant les directions 17 et 17' décrit le cercle 33, lieu de déplacement du centre 32 de la trace 31 au cours de la rotation de l'article 2 autour de l'axe de rotation 4.

## Revendications

1. Dispositif de traitement thermique d'articles de verrerie et de cristallerie dans un plan perpendiculaire à un axe de rotation, comportant le mandrin (1) maintenant l'article à traiter (2) en rotation autour de l'axe (4) perpendiculaire au plan de traitement (3), comprenant une source de calories ou de frigories (14) montée sur un support (15) pouvant se déplacer par rapport à l'embase (16) suivant la direction (17) définie parallèlement au plan de traitement (3), caractérisé en ce qu'il comporte un premier capteur (7) qui, lors d'une opération préalable d'acquisition de données, mesure la position de l'intersection (6) de la paroi extérieure (5) de l'article (2) en rotation et du plan de traitement (3) dans une direction (9) définie parallèlement audit plan (3) en fonction de la position angulaire de l'article (2) mesurée par un deuxième capteur (10), et une unité de mémorisation et de commande (13) qui stocke et traite les données transmises par les capteurs (7 et 10), et en ce qu'il utilise ces données lors du traitement proprement dit pour piloter le déplacement suivant une direction (17), définie parallèlement au plan de traitement (3), de la source de calories ou de frigories (14) de telle sorte que la position de cette source de calories ou de frigories (14) soit sensiblement constante par rapport à la position de l'intersection (6), quelle que soit la position angulaire de l'article (2) en rotation permanente autour de l'axe (4) et cela pendant toute la durée du traitement.

2. Dispositif suivant la revendication 1, caractérisé en ce qu'il comporte un système d'acquisitions de données de pilotage de la source de calories ou de frigories, dont les opérations se passent à des postes de travail distincts.

3. Dispositif suivant la revendication 1, caractérisé en ce qu'il comporte un sytème d'acquisitions de données et de pilotage de la source de calories ou de frigories, dont les opérations se passent sur le même poste de travail à des moments différents.

4. Dispositif suivant la revendication 1, caractérisé en ce qu'il comporte un système d'acquisitions de données et de pilotage de la source de calories ou de frigories, dont les opérations se passent sur le même poste de travail simultanément et à des positions angulaires différentes.

5. Dispositif suivant la revendication 1, caractérisé en ce qu'il comporte un système d'acquisitions de données et de pilotage de la source de calories ou de frigories, dont les opérations se passent sur le même poste de travail, simultanément et à la même position angulaire.

6. Dispositif suivant la revendication 1, caractérisé en ce que le capteur (7) d'acquisition de données est également un outil de traçage en vue d'une opération de décallotage ultérieure.

7. Dispositif suivant l'une quelconque des revendications 1 à 5, caractérisé en ce que, dans une réalisation particulièrement simple, le capteur (7) d'acquisition de données est remplacé par un élément d'appui (36) monté sur le même support mécanique (26) que la source de calories ou de frigories (14) et appliqué souplement sur la paroi (5) de l'article à traiter (2).

8. Dispositif suivant la revendicaiton 1, caractérisé en ce que, dans le cas où l'intersection de l'article (2) avec le plan de traitement (3) est sensiblement circulaire et présente seulement un excentrique par rapport à la base de l'article (2) maintenue dans le mandrin (1), la source de calories ou de frigories (14) est annulaire et est à tout moment maintenue concentrique par rapport à la trace (31) de forme Sensiblement circulaire ou assimilée de l'article (2) dans le plan de traitement (3) par un déplacement continu du support (15) suivant deux directions (17 et 17').

## Claims

1. A device for heat treating glassware and crystalware articles in a plane perpendicular to an axis of rotation, including the mandrel (1) maintaining the article (2) to be treated in rotation about the axis (4) perpendicular to the treatment plane (3), comprising a heat or cold source (14) mounted on a support (15) which can be displaced in relation to the seating (16) along the direction (17) defined as parallel to the treatment plane (3), characterized in that it comprises a first sensor (7) which in the course of a previous data acquisition operation measures the position of the intersection (6) of the external wall (5) of the article (2) in rotation and of the treatment plane (3) in a direction (1) defined as parallel to said plane (3) as a function of the angular position of the article (2) as measured by a second sensor (10), and a storage and command unit (13) which stores and processes the data transmitted by the sensors (7) and (10), and in that it utilises these data in the course of the treatment per se to drive the displacement along the direction (17) defined as parallel to the treatment plane (3), of the heat or cold source (14), in such a manner that the position of this heat or cold source (14) is substantially constant in relation to the position of the intersection (6), irrespective of the angular position of the article (2) in continous rotation about the axis (4), this being so throughout the entire duration of the treatment.

2. The device as claimed in claim 1, characterized in that it comprises a data acquisition system for driving the heat source or the cold source, the operations of which take place at distinct working stations.

3. The device as claimed in claim 1, characterized in that it comprises a system for data acquisition and for driving the heat source or the cold source, the operations of which take place at the same working station at different instants.

4. The device as claimed in claim 1, characterized in that it comprises a system for data acquisition and for driving the heat source or the cold source, the operations of which take place at the same working station, simultaneously and at different angular positions.

5. The device as claimed in claim 1, characterized in that it comprises a system for data acquisition and for driving the heat source or the cold source, the operations of which take place at the same working station, simultaneously and at the same angular position.

6. The device as claimed in claim 1, characterized in that the sensor (7) for data acquisition is likewise a scribing tool with a view to a subsequent demoiling operation.

7. The device as claimed in any one of claims 1 to 5, characterized in that in a particularly simple construction, the sensor (7) for data acquisition is replaced by a bearing element (36) mounted on the same mechanical support (26) as the heat or cold source (14) and resiliently applied to the wall (5) of the article (2) to be treated.

8. The device as claimed in claim 1, wherein, in the case where the intersection of the article (2) with the treatment plane (3) is substantially circular and exhibits only an eccentricity in relation to the base of the article (2) which base is retained in the mandrel (1), the heat or cold source (14) is annular and is at any instant maintained concentric in relation to the trace (31), of substantially circular or similar shape, of the article (2) in the treatment plane (3) by a continuous displacement of the support (15) along two directions (17 and 17').

## Patentansprüche

1. Vorrichtung zur thermischen Behandlung von Glas- oder Kristallgegenständen in einer senkrecht zu einer Rotationsachse stehenden Ebene, mit einem Spannfutter (1), das den zu behandelnden Gegenstand (2) in Rotation um die zur Behandlungsebene (3) senkrechte Achse (4) hält, und mit einer Kalorien- oder Kilokalorienquelle (14), die auf einem Träger (15) montiert ist und sich bezüglich der Grundplatte (16) in einer Richtung (17) verschieben kann, die parallel zur Behandlungsebene (3) ausgerichtet ist, **dadurch gekennzeichnet**, daß sie einen ersten Meßfühler (7), der bei einer vorhergehenden Operation der Datenaufnahme in Abhängigkeit von der von einem zweiten Meßfühler (10) gemessenen Winkelstellung des Gegenstands (2) die Position des Schnittes (6) der Außenwand (5) des rotierenden Gegenstands (2) und der Behandlungsebene (3) in einer Richtung (9) mißt, die parallel zu der Ebene (3) ausgerichtet ist, sowie eine Speicher- und Steuereinheit (13) umfaßt, die die von den Meßfühlern (7 und 10) übertragenen Daten speichert und verarbeitet, und daß sie diese Daten bei der eigentlichen Behandlung verwendet, um die Verschiebung in einer Richtung (17), die parallel zu der Behandlungsebene (3) ausgerichtet ist, der Kalorien- oder Kilokalorienquelle (14) derart zu steuern, daß die Position dieser Kalorien- oder Kilokalorienquelle (14) unabhängig von der Winkelstellung des permanent um die Achse (4) rotierenden Gegenstands (2) während der ganzen Behandlungsdauer bezüglich der Position des Schnittes (6) im wesentlichen konstant bleibt.

2. Vorrichtung nach Anspruch 1, dadurch gekennzeichnet, daß sie ein System zur Aufnahme von Daten zur Steuerung der Kalorien- oder Kilokalorienquelle umfaßt, deren Operationen an verschiedenen Arbeitsstellen ablaufen.

3. Vorrichtung nach Anspruch 1, dadurch gekennzeichnet, daß sie ein System zur Aufnahme von Daten und zur Steuerung der Kalorien- oder Kilokalorienquelle umfaßt, deren Operationen zu verschiedenen Zeitpunkten an der gleichen Arbeitsstelle ablaufen.

4. Vorrichtung nach Anspruch 1, dadurch gekennzeichnet, daß sie ein System zur Aufnahme von Daten und zur Steuerung der Kalorien- oder Kilokalorienquelle umfaßt, deren Operationen gleichzeitig an der gleichen Arbeitsstelle und bei verschiedenen Winkelstellungen ablaufen.

5. Vorrichtung nach Anspruch 1, dadurch gekennzeichnet, daß sie ein System zur Aufnahme von Daten und zur Steuerung der Kalorien- oder Kilokalorienquelle umfaßt, deren Operationen an der gleichen Arbeitsstelle, gleichzeitig und in der gleichen Winkelstellung ablaufen.

6. Vorrichtung nach Anspruch 1, dadurch gekennzeichnet, daß der Meßfühler (7) für die Datenaufnahme gleichfalls ein Vortriebswerkzeug hinsichtlich einer nachfolgenden Abtrennung von der Kalotte ist.

7. Vorrichtung nach einem der Ansprüche 1 bis 5, dadurch gekennzeichnet, daß in einer besonders einfachen Ausführungsform der Meßfühler (7) zur Datenaufnahme durch ein Auflageelement (36) ersetzt ist, das auf dem gleichen mechanischen Träger (26) wie die Kalorien- oder Kilokalorienquelle (14) montiert ist und elastisch auf der Wand (5) des zu behandelnden Gegenstands (2) aufliegt.

8. Vorrichtung nach Anspruch 1, dadurch gekennzeichnet, daß in dem Fall, in dem der Schnitt des Gegenstands (2) mit der Behandlungsebene (3) im wesentlichen kreisförmig ist und nur eine Exzentrizität bezüglich der Basis des in dem Spannfutter (1) gehaltenen Gegenstands (2) aufweist, die Kalorien- oder Kilokalorienquelle (14) ringförmig ist und durch eine andauernde Verschiebung des Trägers (15) in zwei Richtungen (17 und 17') ständig konzentrisch bezüglich der Spur (31) mit im wesentlichen kreisförmiger oder dazu sehr ähnlicher Form des Gegenstands (2) in der Behandlungsebene (3) gehalten ist.
